## Europäisches Patentamt
## European Patent Office
## Office européen des brevets

(11) Veröffentlichungsnummer: **0 132 692**
**B1**

(12) **EUROPÄISCHE PATENTSCHRIFT**

(45) Veröffentlichungstag der Patentschrift: **19.12.90**

(21) Anmeldenummer: **84108056.7**

(22) Anmeldetag: **10.07.84**

(51) Int. Cl.⁵: **G 01 K 11/16**

(54) Wärmeerholbarer Gegenstand mit Temperaturindikation.

(30) Priorität: **20.07.83 DE 3326021**

(43) Veröffentlichungstag der Anmeldung:
**13.02.85 Patentblatt 85/07**

(45) Bekanntmachung des Hinweises auf die
Patenterteilung:
**19.12.90 Patentblatt 90/51**

(84) Benannte Vertragsstaaten:
**BE DE FR GB IT NL**

(56) Entgegenhaltungen:
**EP-A-0 000 868**
**GB-A-2 038 478**
**US-A-3 816 335**

(73) Patentinhaber: **ANT Nachrichtentechnik GmbH**
**Gerberstrasse 33**
**D-7150 Backnang (DE)**

(72) Erfinder: **Mangold, Hugo, Dr. Dr.-chem.**
**Häfnersweg 46**
**D-7150 Backnang (DE)**
Erfinder: **Bovensiepen, Kurt**
**Sommerhaldenstrasse 28**
**D-7057 Winnenden (DE)**

(74) Vertreter: **Wiechmann, Manfred, Dipl.-Ing.**
**ANT Nachrichtentechnik GmbH Gerberstrasse**
**33 Postfach 11 20**
**D-7150 Backnang (DE)**

Die Akte enthält technische Angaben, die nach
dem Eingang der Anmeldung eingereicht
wurden und die nicht in dieser Patentschrift
enthalten sind.

Courier Press, Leamington Spa, England.

## Beschreibung

Die Erfindung betrifft einen wärmeerholbaren Gegenstand gemäß dem Oberbegriff des Patentanspruches 1.

Ein wärmeerholbarer Gegenstand mit einer die Temperatur anzeigenden Überzugszusammensetzung ist bekannt aus DE-A-29 51 921. Beim Gegenstand der DE-A-29 51 921 besteht die die Temperatur anzeigende Zusammensetzung aus einem zersetzbaren organischen Material, das bei Erwärmen des wärmeerholbaren Gegenstandes auf eine vorgewählte Temperatur schmilzt und sich unter Bildung einer sichtbaren Farbänderung ersetzt. Nachteilig hierbei ist die eingeschränkte Stoffauswahl wegen der Forderung der organischen Zusammensetzung. Auch läßt sich die Umschlagtemperatur nicht variabel einstellen. Mehrfachumschläge sind bei diesem Gegenstand nur mit sehr großem Aufwand zu realisieren.

Aus der US-A-3,816,335 sind wärmeerholbare Gegenstände bekannt, die Thermochromismus zeigen. Der Farbumschlag ist reversibel, er beruht auf einer Änderung der Umgebung der thermochromen Komponente, die anorganisch sein kann. Es ist bekannt, mehrere thermochrome Komponenten zu verwenden, die einen Farbumschlag bei verschiedenen Temperaturen bewirken.

Aus der EP-A-0 000 868 ist es an sich bekannt, Gegenstände mit einer Überzugszusammensetzung zu versehen, die eine Temperaturanzeige bewirkt. Die Temperaturanzeige erfolgt durch einen Farbumschlag, der auf einer Änderung des Brechungsindexes von organischen Pigmenten beruht.

Aufgabe vorliegender Erfindung ist es, einen wärmeerholbaren Gegenstand gemäß dem Oberbegriff des Patentanspruches 1 so auszubilden, daß der Erwärmungsvorgang genau, an mehreren Punkten, kontrolliert wird. Zudem sollte auch ein kleiner Abstand zwischen den Temperaturen, bei denen ein Farbumschlag stattfindet, realisierbar sein.

Diese Aufgabe wird durch die Merkmale des Patentanspruches 1 gelöst. In den abhängigen Ansprüchen sind vorteilhafte Ausgestaltungen der Erfindung aufgezeigt.

Die Temperaturindikation beim Gegenstand der Erfindung läßt eine größere Stoffauswahl als bei bisher üblichen Zusammensetzungen zu. Die Umschlagtemperatur ist absolut variabel vorwählbar. Mit gleichem Pigment ist ein Variationsbereich von ± 50° Celsius erreichbar. Bei der Erfindung erfolgt eine Temperaturindikation bei Erreichen einer bestimmten Temperatur durch Änderung des Brechungsindexes und eine weitere irreversible Temperaturindikation.

Für Pigment und Bindemittel als Überzugszusammensetzung des wärmeerholbaren Gegenstandes werden gezielt Materialien unterschiedlichen Brechungsindexes gewählt. Bei einem Pigment, das für das Undurchsichtigwerden der Überzugszusammensetzung verantwortlich ist, erfolgt bei der Verschmelzung mit dem Bindemittel ein Wechsel von einer zuvor undurchsichtigen Farbe in eine durchsichtige Farbe. Ist das Basismaterial des wärmeerholbaren Gegenstandes schwarz, so erfolgt ein Farbumschlag nach schwarz. Um einen ausgeprägten Farbumschlag nach der Erfindung zu erreichen, sollte die Differenz in Brechungsindex vom Pigment und Bindemittel mindestens $n_{diff} = 0,3$ betragen. Als Überzugszusammensetzung eignet sich beispielsweise niedermolekulares Polyester als Bindemittel und n-Glutaminsäure als Pigment. Anstelle dieses organischen kann auch ein anorganisches Pigment, beispielsweise Lithiumnitrat, verwendet werden. Als Bindemittel hierfür ist Polyethylen geeignet. Das zweckmäßigerweise farblos gewählte Pigment — die Farbe erscheint dann weiß — kann durch einen geringen Farbstoffzusatz zu einer weiteren Temperaturanzeige verwendet werden. Durch sichtbare Änderung des Farbstoffzusatzes bei einer bestimmten Temperatur ist daher ein weiterer Temperaturumschlag erkennbar. Ändert sich der Farbstoffzusatz durch geeignete Auswahl bei einer Temperatur unterhalb des Bindemittelschmelzungspunktes, so kann das "Weißwerden" der Farbe als Vorwarnung dienen bzw. als Beweis dafür, daß eine bestimmte Temperatur überschritten wurde und die weitere Erwärmung unter sorgfältiger Kontrolle zu erfolgen hat. Der bei der Verschmelzung durch Änderung des Brechungsindexes hervorgerufene "Temperaturumschlag" tritt dann erst später ein.

Die Überzugszusammensetzung bietet bei der Aufbringung auf Schrumpfmuffen besondere Vorteile. Der Erwärmungsvorgang ist einfach feststellbar und genau kontrollierbar. Bei der Wärmebehandlung erfolgt im Temperaturbereich von 215 bis 220° Celsius beispielsweise der erste Temperaturumschlag von grün nach weiß und bei 240 bis 250° Celsius das Farbloswerden, d.h. bei schwarzem Hintergrundmaterial der Umschlag auf schwarz. Dieser durch die Brechungsindexänderung zurückzuführende Umschlag ist reversibel, wohingegen die sichtbare Änderung des Farbstoffzusatzes im allgemeinen irreversibel ist.

## Patentansprüche

1. Wärmeerholbarer Gegenstand mit einer die Temperatur anzeigenden Überzugszusammensetzung, bestehend aus einem im Bereich der Wärmebehandlung des wärmeerholbaren Gegenstandes mit einem Bindemittel verschmelzenden Pigmentes und aus einem Zusatz einer geringen Farbstoffmenge als weiterer Temperaturindikator bei einer anderen Temperatur als der Temperatur bei der das Pigment mit dem Bindemittel verschmilzt wobei, für Pigment und Bindemittel Materialien unterschiedlichen Brechungsindexes gewählt werden, die bei Erreichen der Schmelztemperatur des Pigments und/oder Bindemittels zu einem Stoffgemisch einheitlichen Brechungsindexes verschmelzen und daß eine Farbstoffmenge derart zugesetzt ist, daß der weitere Farbumschlag irreversibel ist.

2. Wärmeerholbarer Gegenstand nach Anspruch 1, dadurch gekennzeichnet, daß das Pigment derart gewählt ist, daß es sich bei einer Temperatur unterhalb oder oberhalb der Verschmelzungstemperatur mit dem Bindemittel sichtbar ändert.

3. Wärmeerholbarer Gegenstand nach Anspruch 1, dadurch gekennzeichnet, daß die Differenz bezüglich des Brechungsindexes beider Materialien $n_{diff} \geq 0,3$ gewählt ist.

4. Wärmeerholbarer Gegenstand nach Anspruch 1, dadurch gekennzeichnet, daß die aus Pigment und Bindemittel bestehende Überzugszusammensetzung so gewählt ist, daß sie vor Erreichen der Verschmelzungstemperatur undurchsichtig ist und bei Erreichen der Verschmelzungstemperatur durchsichtig wird.

5. Wärmeerholbarer Gegenstand nach einem der Ansprüche 1 bis 4, dadurch gekennzeichnet, daß das Pigment aus einem anorganischen Material besteht.

6. Wärmeerholbarer Gegenstand nach einem der Ansprüche 1 bis 4, dadurch gekennzeichnet, daß das Bindemittel aus niedermolekularem Polyester und das Pigment aus n-Glutaminsäure besteht.

7. Wärmeerholbarer Gegenstand nach einem der Ansprüche 1 bis 5, dadurch gekennzeichnet, daß das Bindemittel aus Polyethylen oder Polyester und das Pigment aus Lithiumnitrat besteht.

**Revendications**

1. Article à récupération thermique avec une composition de revêtement indiquant la température, consistant en un pigment fondant ensemble avec un liant dans le domaine du traitement thermique de l'article à récupération thermique et une addition d'une faible quantité de colorant comme autre indicateur de température à une autre température que celle à laquelle le pigment fond avec le liant, dans lequel on choisit comme pigment et comme liant des substances d'indices de réfraction différents, qui fondent ensemble en atteignant la température de fusion du pigment et/ou du liant en un mélange de substances d'indice de réfraction unique et dans lequel on ajoute une quantité de colorant de manière que l'autre virage coloré soit irréversible.

2. Article à récupération thermique selon la revendication 1, caractérisé en ce que le pigment est choisi de manière qu'il se modifie de manière visible à une température inférieure ou supérieure à la température de fusion avec le liant.

3. Article à récupération thermique selon la revendication 1, caractérisé en ce qu'on choisit une différence d'indice de réfraction entre les deux substances $n_{diff} \geq 0,3$.

4. Article à récupération thermique selon la revendication 1, caractérisé en ce que la composition de revêtement consistant en pigment et liant est choisie de telle sorte qu'elle est opaque avant d'atteindre la température de fusion et devient transparente en atteignant la température de fusion.

5. Article à récupération thermique selon l'une des revendications 1 à 4, caractérisé en ce que le pigment consiste en une substance inorganique.

6. Article à récupération thermique selon l'une des revendications 1 à 4, caractérisé en ce que le liant consiste en un polyester de bas poids moléculaire et le pigment en acide n-glutamique.

7. Article à récupération thermique selon l'une des revendications 1 à 5, caractérisé en ce que liant consiste en polyéthylène ou en polyester et le pigment en nitrate de lithium.

**Claims**

1. Heat-recoverable article with a coating composition indicating the temperature and consisting of a pigment which fuses with a binding agent in the range of heat treatment of the heat-recoverable article and of an additive of a small quantity of colouring substance as further temperature indicator at a temperature other than the temperature, at which the pigment fuses with the binding agent, wherein materials of different refractive index are chosen for pigment and binding agent, which materials on reaching the melting temperature of the pigment and/or binding agent fuse into a substance mixture of uniform refractive index and that a quantity of colouring substance is added in such a manner that the further colour change is irreversible.

2. Heat-recoverable article according to claim 1, characterised thereby, that the pigment is chosen in such a manner that it changes visibly at a temperature below or above the fusing temperature with the binding agent.

3. Heat recoverable article according to claim 1, characterised thereby, that the difference in respect of the refractive index of both materials is chosen to be $n_{diff} \geq 0.3$.

4. Heat-recoverable article, according to claim 1, characterised thereby, that the coating composition consisting of pigment and binding agent is so chosen that it is opaque before reaching the fusing temperature and becomes transparent on reaching the fusing temperature.

5. Heat-recoverable article according to one of the claims 1 to 4, characterised thereby, that the pigment conists of an inorganic material.

6. Heat-recoverable article according to one of the claims 1 to 4, characterised thereby, that the binding agent consists of low molecular polyester and the pigment consists of n-glutamic acid.

7. Heat-recoverable article according to one of the claims 1 to 5, characterised thereby, that the binding agent consists of polyethylene or polyester and the pigment consists of lithium nitrate.